Europäisches Patentamt

European Patent Office

Office européen des brevets

(11) Veröffentlichungsnummer: **0 213 626 B1**

(19)

(12) **EUROPÄISCHE PATENTSCHRIFT**

(45) Veröffentlichungstag der Patentschrift: **12.08.92**

(21) Anmeldenummer: **86112063.2**

(22) Anmeldetag: **01.09.86**

(51) Int. Cl.⁵: **C08G 59/18**, C08G 59/14, C08G 59/40, C08G 14/12, C08G 18/54, C09D 5/44

(54) **Verfahren zur Herstellung von modifizierten Epoxidharzen.**

(30) Priorität: **05.09.85 AT 2591/85**
**31.07.86 AT 2060/86**

(43) Veröffentlichungstag der Anmeldung:
**11.03.87 Patentblatt 87/11**

(45) Bekanntmachung des Hinweises auf die Patenterteilung:
**12.08.92 Patentblatt 92/33**

(84) Benannte Vertragsstaaten:
**BE CH DE FR GB IT LI NL SE**

(56) Entgegenhaltungen:
**EP-A- 0 122 425**
**EP-A- 0 158 128**
**DE-A- 2 554 080**

(73) Patentinhaber: **Vianova Kunstharz Aktiengesellschaft**

**A-8402 Werndorf(AT)**

(72) Erfinder: **Paar, Willibald, Dr.**
**Richard Wagnergasse 46**
**A-8010 Graz(AT)**
Erfinder: **Hönel, Michael Dr.**
**Humboldtstrasse 51**
**A-8010 Graz(AT)**

EP 0 213 626 B1

**Beschreibung**

Die Erfindung betrifft ein Verfahren zur Herstellung von modifizierten kationischen Epoxidharzen, wobei substituierte Harnstoffgruppen aufweisende aminoalkylierte Phenole zur Kettenverlängerung von Diepoxidharzen herangezogen werden.

Die Kettenverlängerung von Epoxidharzen zur Beeinflussung der Haftfestigkeit und der Elastizität der vernetzten Filme, ohne Beeinflussung der Korrosionsfestigkeit, wird bei der Herstellung von kationischen Harzen, insbesondere bei Bindemitteln für die kathodische Elektrotauchlackierung (KETL), in vielfältiger Weise versucht.

Versuche einer Kettenverlängerung mit Diphenolen, welche zu einer Molekülverlängerung bei niedrigmolekularen Epoxidharzen führen, sind unter anderem in den US-PSS 4,339,368, 4,339,369 oder in den DE-OSS 23 39 398 und 25 31 960 beschrieben. Auf diese Weise ist jedoch außer einer Molekülvergrößerung keine wesentliche Beeinflussung der Haftungseigenschaft oder der Filmbildungstemperatur zu erreichen.

Durch partielle Veresterung mit langkettigen Monocarbonsäuren und/oder Di- bzw. Polycarbonsäuren, z. B. maleinisierten Ölenoder maleinisierten Polybutadienen, sauren Alkydharzen oder Copolymerisaten soll gemäß der DE-AS 19 30 949 sowohl die Haftfestigkeit als auch die Elastizität verbessert werden.

Gemäß US-PS 4,104,147 oder US-PS 4,148,772 erfolgt eine Kettenverlängerung bei kationisch modifizierten Epoxidharzen durch Reaktion mit Polyolen mit mindestens 2 primären Hydroxylgruppen, wodurch die Aufbruchsspannung und die Filmbildungstemperatur bzw. die Elastizität der Filme verbessert werden können.

In der letzten Zeit hat es sich gezeigt, daß diese Modifikationen nicht mehr ausreichen, um die gesteigerten Ansprüche, insbesonders der Automobilindustrie ausreichend zu befriedigen.

Nach neueren Erkenntnissen kann die Haftfestigkeit kathodisch aufgebrachter Filme verbessert werden, wenn die eingesetzten kationischen Bindemittel Amidstrukturen aufweisen. Die Art des Einbaues ist jedoch von wesentlicher Bedeutung, da beispielsweise Aminoamidverbindungen aus maleinisierten Fettsäuren und Polyaminen, wie sie in der US-PS 4,274,989 oder der US-PS 4,036,795 beschrieben sind, keine diesbezüglichen Verbesserungen zeigen.

Eine weitere Möglichkeit des Einbaues von Amid- und/oder Harnstoffgruppen wird in der kürzlich veröffentlichten EP-A- 0 137 459 beschrieben, wobei eine Kettenverlängerung bei Epoxidharzen durch Diamine, welche die genannten Gruppen aufweisen, erfolgt. Die für den kationischen Charakter der Bindemittel verantwortlichen basischen Gruppen werden durch zusätzliche Amin-additionen eingeführt.

In der AT-PS 379 406 werden Carbonsäureamidstrukturen über spezielle sekundäre Amine eingeführt, welche gleichzeitig anteilig oder zur Gänze dem Molekül den für die Wasserverdünnbarkeit notwendigen kationischen Charakter verleihen.

Aminoalkylierte Phenole werden z. B. in der AT-PS 378 537 zur Herstellung von gegebenenfalls selbstvernetzenden Elektrotauchlackbindemitteln herangezogen.

Es wurde nun gefunden, daß eine vorteilhafte Modifizierung von Diepoxidharzen für den Einsatz als Lackbindemittel möglich ist, wenn man entsprechend formulierte Molekülbausteine, welche durch modifizierte Harnstoffgruppen verknüpfte Phenole darstellen, als durch Veretherung eingebaute kettenverlängernde Bausteine bei Diepoxidharzen einsetzt. Sofern diese Produkte aufgrund der Kettenverlängerung und/oder durch weitere Modifikationen basische Gruppen aufweisen, können sie durch Protonierung in eine wasserverdünnbare Form übergeführt werden und als Bindemittel für kathodisch abscheidbare Elektrotauchlack-Bindemittel dienen.

Die vorliegende Erfindung betrifft demgemäß ein Verfahren zur Herstellung von durch Kettenverlängerung modifizierten kationischen Epoxidharzen, welches dadurch gekennzeichnet ist, daß man ein Umsetzungsprodukt

(A) aus 2 Mol eines durch Reaktion eines mindestens eine formaldehydreaktive Stelle aufweisenden Phenols mit einem primären Amin und Formaldehyd erhaltenen, eine NH-Gruppe aufweisenden Aminoalkylierungsproduktes und 1 Mol eines Diisocyanates oder ein Umsetzungsprodukt

(A1) aus 1 Mol eines durch Reaktion von 1 Mol einer Diisocyantverbindung mit 2 Mol eines primären Amins erhaltenen substituierten Harnstoffs, 2 Mol Formaldehyd oder einer Formaldehyd abspaltenden Verbindung und 2 Mol eines mindestens eine formaldehydreaktive Stelle aufweisenden Phenols,

(B) unter Veretherung der phenolischen Hydroxylgruppen mit 1 Mol einer Diepoxidverbindung pro phenolischer Hydroxylgruppe reagiert
und

(C) die verbleibenden Epoxidgruppen in an sich bekannter Weise mit Aminverbindungen und/oder Carboxylverbindungen umsetzt, mit der Maßgabe, daß das Endprodukt basische Stickstoffgrup-

2

pen in einer Menge aufweist, welche einer Aminzahl von 35 bis 150 mg KOH/g entspricht.

Die Erfindung betrifft weiters durch Kettenverlängerung modifizierte kationische Epoxidharze mit einer Aminzahl von 35 bis 150 mg KOH/g auf der Basis von Umsetzungsprodukten von

(B)    Diepoxidharzen

mit

(A)    Reaktionsprodukten aus 2 Mol eines durch Reaktion eines mindestens eine formaldehydreaktive Stelle aufweisenden Phenols mit einem primären Amin und Formaldehyd erhaltenen, eine NH-Gruppe aufweisenden Aminoalkylierungsproduktes und 1 Mol eines Diisocyanates

oder mit

(A1)    Reaktionsprodukten aus 1 Mol eines durch Reaktion von 1 Mol einer Diisocyanatverbindung mit 2 Mol eines primären Amins erhaltenen substituierten Harnstoffes, 2 Mol Formaldehyd oder einer Formaldehyd abspaltenden Verbindung und 2 Mol eines mindestens eine formaldehyde-aktive Stelle aufweisenden Phenols

unter Veretherung der phenolischen Hydroxylgruppen,

sowie mit

(C)    Amin- und/oder Carboxylverbindungen.

Die Erfindung betrifft schließlich die Verwendung der erfindungsgemäß hergestellten Produkte als Bindemittel in Einbrennlacken, insbesonders als Bindemittel in kathodisch abscheidbaren Elektrotauchlacken.

Durch das erfindungsgemäße Verfahren werden Produkte erhalten, welche einerseits keine verseifbaren Bindungen in den kettenverlängernden Elementen aufweisen, andererseits die zur Verbesserung der Haftungseigenschaften der Lackfilme erwünschten substituierten Harnstoffgruppierungen enthalten.

Für die Herstellung der kettenverlängernden Molekülbausteine können als Phenole Verbindungen mit mindestens einer formaldehydreaktiven Stelle eingesetzt werden. Bei Verwendung höherfunktioneller Phenole weisen die Produkte auch vernetzungsreaktive Stellen auf und können zur Formulierung selbstvernetzender Bindemittel herangezogen werden. Neben dem einfachen Phenol werden Alkylphenole, wie die Butylphenole und ihre Homologe, Diphenole und Diphenylolalkane, wie Bis-(4-hydroxyphenyl)-methan oder 2,2-Bis-(4-hydroxyphenyl-)-propan eingesetzt.

Als primäre Amine können sowohl Alkylamine, vorzugsweise die höheren Homologe mit 4 oder mehr C-Atomen, als auch Alkanolamine, wie das Monoethanolamin und dessen Homologe eingesetzt werden. Zur gleichzeitigen Einführung basischer Gruppen in Form von tertiären Aminogruppen in das Verlängerungselement werden vorteilhaft primär-tertiäre Diamine, z. B. Dialkylaminoalkylamine, wie das Dimethyl- oder Diethylaminopropylamin etc. verwendet.

Der Formaldehyd kann in seinen handelsüblichen Formen als Lösung eingesetzt werden, vorzugsweise wird Paraformaldehyd mit $CH_2O$-Gehalten von mehr als 90 % verwendet.

Als Diisocyanate werden die handelsüblichen Diisocyanate, wie Toluylendiisocyanat, Isophorondiisocyanat, Hexamethylendiisocyanat, Trimethylhexamethylendiisocyanat u. ä. oder Umsetzungsprodukte von Diolen mit Diisocyanaten im Molverhältnis 1 : 2 verwendet.

Die Herstellung der erfindungsgemäß eingesetzten Zwischenprodukte (A) erfolgt in einer ersten Stufe durch gemeinsame Reaktion des Phenols, des Amins und des Formaldehyds bei 80 bis 130°C, wobei das Reaktionswasser mit Hilfe eines Schleppmittels azeotrop entfernt wird. Die weitere Umsetzung mit der Isocyanatverbindung erfolgt, vorzugsweise in Gegenwart eines aprotischen Lösemittels bei 30 bis 50°C, wobei die Isocyanatverbindung portionsweise unter Kühlung zugegeben wird, bis zu einem NCO-Wert von 0.

Bei der Herstellung der Zwischenprodukte (A1) wird das Amin in aprotischen Lösemitteln gelöst und bei 30 bis 60°C unter Kühlung mit dem Diisocyanat versetzt. Die Reaktion ist üblicherweise mit dem Ende der Zugabe abgeschlossen. Nach Zugabe des Formaldehyds und des Phenols wird bei 80 bis 130°C reagiert und das Reaktionswasser durch azeotrope Destillation abgetrennt.

Die Umsetzung der Kettenverlängerungselemente mit den Epoxidharzen erfolgt in bekannter Weise unter Phenoletherbildung, wobei die Reaktion vorteilhafterweise bei 90 bis 120°C in Gegenwart von Lösemitteln und unten Verwendung basischer Katalysatoren, z. B. 0,05 bis 0,2 Gew.-% Triethylamin durch geführt wird.

Die für das erfindungsgemäße Verfahren einsetzbaren Epoxidharze sind handelsübliche Di- epoxidverbindungen, wie sie durch Umsetzung von mehrwertigen Phenolen, insbesondere dem Bisphenol A oder Phenolnovolaken und Epichlorhydrin erhalten werden. Gegebenenfalls können auch andere Epoxidharze, z. B. auf Basis von Polyolen eingesetzt werden. Produkte dieser Art sind dem Fachmann bekannt und werden in der Literatur in großer Zahl beschrieben. Bevorzugt werden für das erfindungsgemäße Verfahren Epoxidharze auf der Basis von Bisphenol A oder Phenolnovolaken mit einem Epoxidäquivalentgewicht von 180 bis 1000 eingesetzt.

Die Diepoxidharze werden gleichzeitig oder nach der Umsetzung mit den Kettenverlängerungselementen durch Einführung basischer Gruppen z. B. durch Epoxidaminbildung oder durch Veresterung mit Carboxylverbindungen verschiedenster Struktur modifiziert. Die Einführung ungesättigter Gruppen kann z. B. durch Reaktion mit Halbestern aus Hydroxyacrylaten und Dicarbonsäuren erfolgen. Basische Gruppen können auch durch Reaktion freier Hydroxylgruppen mit basischen Monoisocyanaten eingeführt werden. Gegebenenfalls kann eine Modifikation auch vor der Kettenverlängerung erfolgen. Wesentlich ist die weitgehende Umsetzung aller Epoxidgruppen, sodaß ein epoxidgruppenfreies Endprodukt vorliegt.

Zur Erzielung der Wasserverdünnbarkeit werden die basischen Gruppen des Reaktionsproduktes mit Säuren, vorzugsweise mit Ameisensäure, Essigsäure oder Milchsäure partiell oder vollständig neutralisiert. Für eine praxisgerechte Verdünnbarkeit genügt dafür üblicherweise eine Neutralisation von 10 - 40 % der basischen Gruppen oder eine Menge von ca.20 bis 60 Millimol Säure pro 100 g Festharz. Die Bindemittel werden dann mit deionisiertem Wasser auf die gewünschte Konzentration verdünnt;gegebenenfalls werden sie vor der Neutralisation oder vor der Verdünnung oder im teilverdünnten Zustand mit Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 170 Grad C während 10 bis 30 Minuten. Sofern die Bindemittel nicht in ausreichendem Maße selbstvernetzende Strukturen aufweisen, können auch zusätzliche Vernetzungsmittel, wie blockierte Isocyanate oder Umesterungshärter oder Aminoharze bzw. Phenolharze, mitverwendet werden. Die Produkte können bei entsprechender Formulierung auch durch andere Verfahren, wie Tauchen, Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Die folgenden Abkürzungen werden in den Beispielen benützt:

| | |
|---|---|
| DEA | Diethylamin |
| DEAPA | Diethylaminopropylamin |
| DMAPA | Dimethylaminopropylamin |
| DOLA | Diethanolamin |
| EHA | 2-Ethylhexylamin |
| HA | n-Hexylamin |
| IBA | Isobutylamin |
| MEOLA | N-Methylethanolamin |
| MIPA | Monoisopropanolamin |
| BPA | Bisphenol A |
| BPF | Bisphenol F |
| DMP | 2,6-Dimethylphenol |
| NPH | Nonylphenol |
| NBP | n-Butylphenol |
| PH | Phenol |
| PF 91 | Paraformaldehyd, 91 % |
| IPDI | Isophorondiisocyanat |
| ODI | Umsetzungsprodukt aus 1 Mol 1,8-Oktandiol und 2 Mol IPDI |
| TDI | Toluylendiisocyanat (handelsübliches Isomerengemisch) |
| TMDI | Trimethylhexamethylendiisocyanat |
| EHX/TDI | TDI halbblockiert mit 2-Ethylhexanol |
| EPH I | Diepoxidharz auf Basis von Bisphenol A (Epoxidäquivalentgewicht ca. 475) |
| EPH II | Diepoxidharz auf Basis von Bisphenol A (Epoxidäquivalentgewicht ca. 190) |
| CE | technisches Gemisch aus Glycidylestern der 1,1-Dimethyl-($C_7$-$C_9$)-alkancarbonsäuren |
| DMPS | Dimethylolpropionsäure |
| HE 1 | Halbester aus Phthalsäureanhydrid und Hydroxyethyloxazolidin, 70%ig in DGDE (Molgewicht 265) |
| HE 2 | Halbester aus Tetrahydrophthalsäureanhydrid und Hydroxyethylmethacrylat (Molgewicht ca. 282) |
| BM I | Basisches Monoisocyanat aus 1 Mol Isophorondiisocyanat und 1 Mol Diethylethanolamin; 60%ig in MIBK (Molgewicht 239) |

| DGDE | Diethylenglykoldimethylether |
| MIBK | Methylisobutylketon |
| PGME | Propylenglykolmonomethylether |
| X | Xylol |
| NMP | N-Methylpyrrolidon |

Herstellung der erfindungsgemäß eingesetzten kettenverlängernden Molekülbausteine

Umsetzungsprodukte (A):

In einem Reaktionsgefäß werden gemäß den in der Tabelle 1 angegebenen Mengenverhältnissen die Phenolkomponente und das Amin sowie ein Schleppmittel zur Entfernung des Reaktionswassers, z. B. Toluol auf ca. 75°C erwärmt. Nach Zusatz des Formaldehyds, vorzugsweise in Form von Paraformaldehyd wird die Temperatur langsam erhöht, bis sich eine zügige azeotrope Destillation einstellt. Nach Abtrennung des berechneten Reaktionswassers wird das Schleppmittel im Vakuum abdestilliert und der Ansatz im vorgesehenen aprotischen Lösemittel gelöst.

Die so erhaltene Lösung wird bei 30 bis 50°C unter Kühlung portionsweise mit dem Diisocyanat versetzt und die Reaktion bis zu einem NCO-Wert von praktisch 0 geführt. Das Zwischenprodukt wird dann mit dem Lösemittel weiter auf den in der Tabelle 1 angegebenen Festkörpergehalt verdünnt.

Umsetzungsprodukte (A1):

In einem Reaktionsgefäß werden gemäß den in Tabelle 1 a angegebenen Mengenverhältnissen das Amin(gemisch) und das Lösemittel vorgelegt. Bei 30 bis 50°C wird unter Kühlung das Diisocyanat innerhalb von 30 bis 60 Minuten gleichmäßig zugegeben. Nach Ende der Zugabe wird der Ansatz auf 70°C erwämt und der Paraformaldehyd zugesetzt. Der Ansatz wird 1 Stunde bei 70 bis 80°C gehalten und nach Zugabe des Phenols das Reaktionswasser bei dieser Temperatur mit einem Schleppmittel, z. B. Toluol, azeotrop entfernt. Nach Abziehen des Schleppmittels im Vakuum wird der Ansatz auf den angegebenen Festkörpergehalt verdünnt.

Tabelle 1 : Zwischenprodukte Typ (A)

| ZP | Tle Phenol Mol | Tle Amin Mol | Tle PF 91/ Mol CH$_2$O | Lösemittel/ Festkörper- gehalt % | Diisocyanat Tle ( = 1 Mol) | eingestellter Endfestkör- pergehalt % | molgewicht (berechnet) |
|---|---|---|---|---|---|---|---|
| 1 | 300 NBP 2,0 | 146 2,0 | IBA 66/2,0 | DGDE / 80 | 210 TMDI | 75 | 680 |
| 2 | 244 DMP 2,0 | 202 2,0 | HA 66/2,0 | MIRK / 80 | 222 IPDI | 75 | 692 |
| 3 | 440 NPH 2,0 | 73 1,0 MIPA 73 1,0 IBA | 66/2,0 | X / 85 | 174 TDI | 70 | 784 |
| 4 | 400 BPF 2,0 | 65 0,5 DEAPA 152 1,5 HA | 66/2,0 | MIBK / 75 | 210 TMDI | 70 | 851 |
| 5 | 94 1,0 PH 220 1,0 NPH | 146 2,0 | MIPA 66/2,0 | DGDE / 80 | 590 ODI | 70 | 1074 |

EP 0 213 626 B1

Tabelle 1 a : Zwischenprodukte Typ ( A 1 )

| ZP | Tle Amin Mol | Diisocyanat Tle (=1 Mol) | Lösemittel/ Festkörper- gehalt % | Tle PP 91 / Mol CH2O | Tle Phenol Mol | eingestellter Endfestkör- pergehalt % | Molgewicht (berechnet) |
|---|---|---|---|---|---|---|---|
| 6 | 73 MIPA 1,0 / 73 IBA 1,0 | 210 TMDI | NMP / 70 | 66 / 22,0 | 440 NPH 2,0 | 70 | 820 |
| 7 | 260 DEAPA 2,0 | 590 ODI | DODE / 70 | 66 / 2,0 | 300 NBP 2,0 | 70 | 1174 |
| 8 | 202 HA 2,0 | 222 IPDI | NMP / 70 | 66 / 2,0 | 244 DMP 2,0 | 70 | 692 |

Erfindungsgemäße Beispiele

Beispiel 1 : In einem geeigneten Reaktionsgefäß werden 475 Tle (1 Val) EPH I in 204 Tlen PGME gelöst und mit 181 Tlen des Zwischenproduktes ZP 1 (entsprechend 136 Tlen Festharz = 0,2 Mol) in Gegenwart von 0,5 Tlen Triethylamin als Katalysator bei 110°C reagiert bis der Gehalt an freien Epoxidgruppen 0,6 Mol entspricht. Nach Kühlen auf 75°C werden dem Ansatz 26 Tle (0,2 Mol) DEAPA und 21 Tle (0,2 Mol) DOLA zugesetzt und die Reaktion bei 80°C bis zu einem Epoxidwert von 0 weitergeführt. Das Produkt wird mit 105 Tlen PGME auf einen Festkörper von 65 % verdünnt und weist eine Aminzahl von 51 mg KOH/g auf.

Beispiel 2: In gleicher Weise wie im Beispiel 1 beschrieben, wird ein Gemisch aus 190 Tlen (1 Val) EPH II und 475 Tlen (1 Val) EPH I in 222 Tlen PGME gelöst und mit 461 Tlen ZP 2 (entsprechend 346 Tlen Festharz = 0,5 Mol; entspricht 1 Mol phenolische OH-Gruppen) in Gegenwart von 1,0 Tlen Triethylamin bei 115°C umgesetzt, bis der Gehalt an Epoxidgruppen 1 Mol entspricht. Nach Kühlen auf 60°C werden 15 Tle (0,2 Mol) MEOLA und 41 Tle (0,4 Mol) DMAPA zugegeben und die Reaktion bis zu einem Epoxidwert von 0 weitergeführt. Der Ansatz wird mit DGDE auf einen Festkörpergehalt von 70 % verdünnt und weist eine Aminzahl von 52 mg KOH/g auf.

Beispiel 3 : 380 Tle (2 Val) EPH II werden mit 189 Tlen HE 1 (entsprechend 133 Tlen Festharz = 0,5 Mol) und 243 Tlen ZP 4 (= 170 Tle Festharz = 0,2 Mol, entsprechend 0,8 Mol phenolische OH-Gruppen) bei 90°C 1 Stunde gerührt. Bei 65°C werden 22 Tle (0,3 Mol) DEA und 26 Tle (0,2 Mol) DEAPA sowie 184 Tle PGME zugegeben und der Ansatz bei 75°C bis zu einem Epoxidwert von 0 reagiert. Das Produkt weist einen Festkörpergehalt von 70 % und eine Aminzahl von 100 mg KOH/g auf.

Beispiel 4 : Einer Lösung von 950 Tlen (2 Val) EPH I und 152 Tlen (0,8 Val) EPH II in 698 Tlen MIBK werden 508 Tle (1,8 Mol) HE 2 und 560 Tle ZP 3 (entsprechend 392 Tlen Festharz = 0,5 Mol) zugesetzt. Bei 110°C wird der Ansatz in Gegenwart von 1,5 Tlen Triethylamin bis zu einem Epoxidwert von 0 reagiert. Nach Kühlen auf 60°C werden 1194 Tle BMI (entsprechend 836 Tlen Festharz = 3,5 Mol) zugegeben und bis zur Umsetzung aller Isocyanatgruppen gehalten. Das erhaltene Bindemittel ist durch thermische Polymerisation härtbar und weist einen Festkörpergehalt von ca. 70 % und eine Aminzahl von 69 mg KOH/g auf.

Beispiel 5 : 285 Tle (1,5 Val) EPH II werden bei 110°C in Gegenwart von 0,2 Tlen Triethylamin mit 384 Tlen ZP 5 (entsprechend 268 Tlen Festharz = 0,25 Mol) umgesetzt, bis noch 1 Mol Epoxidgruppen frei sind. Bei 65°C werden dann 59 Tle (0,45 Mol) DEAPA und 58 Tle (0,45 Mol) EHA zugegeben und die Reaktion bei 70°C bis zu einem Epoxidwert von 0 weitergeführt.

Dieses Reaktionsprodukt wird in einer weiteren Reaktionsstufe bei 70°C mit 300 Tlen PGME sowie 30 Tlen (0,2 Mol) NBP, 160 Tlen (0,7 Mol) BPA und 66 Tlen (2 Mol) PF 91 versetzt und bis zu einem Gehalt an freiem Formaldehyd von weniger als 0,3 % reagiert. Anschließend wird mit PGME auf einen Festkörpergehalt von 65 % verdünnt. Das resol-härtbare Bindemittel weist eine Aminzahl von 86 mg KOH/g auf.

Beispiel 6 : 304 Tle (1,6 Val) EPH II werden in Anwesenheit von 76 Tlen PGME und 0,2 Tlen Triethylamin bei 110°C mit 336 Tlen ZP 3 (entsprechend 235 Tlen Festharz = 0,3 Mol) umgesetzt, bis 0,6 Mol Epoxidgruppen verbraucht sind (Komponente A).

In einem getrennten Reaktionsgefäß werden 228 Tle Bisphenol A (1 Mol) mit 260 Tlen DEAPA (2 Mol) und 66 Tlen PF 91 % (2 Mol) in Gegenwart von 131 Tlen Toluol als Azeotropschleppmittel bis zur Abtrennung von 42 Tlen Reaktionswasser umgesetzt. Nach Kühlen auf 30°C werden innerhalb 45 Minuten 608 Tle (2,0 Mol) eines EHX/TDI zugegeben. Sobald ein Epoxidwert von praktisch 0 erreicht ist, wird das Produkt in 152 Tlen DGDE gelöst (Komponente B).

716 Tle Komponente A und 1403 Tle Komponente B werden mit 361 Tlen PGME und 250 Tlen (1 Mol) CE versetzt und bei 95 bis 100°C bis zu einem Epoxidwert von 0 umgesetzt. Das Produkt weist einen Festkörpergehalt von 70 % und eine Aminzahl von 59 mg KOH/g auf. Zur Verarbeitung wird das Produkt mit 0,6 Tlen/100 Tlen Festharz (berechnet als Metall) eines Zinnkatalysators, z B. Dibutylzinndilaurat versetzt.

Beispiel 7: In gleicher Weise, wie im Beispiel 4 angegeben, wird eine Harzlösung hergestellt, wobei anstelle des dort verwendeten ZP 3 586 Tle ZP 6 (entsprechend 410 Tle Festharz = 0,5 Mol) eingesetzt werden.

Beispiel 8: 760 Tle (4,0 Val) EPH II werden in 326 Tlen PGME gelöst und in Gegenwart von 1,0 Tl Triethylamin mit 268 Tlen (2 Mol) DMPS bei 100°C bis zu einer Säurezahl von weniger als 2 mg KOH/g umgesetzt. Dann werden 1677 Tle ZP 7 (entsprechend 1174 Tlen Festharz = 1,0 Mol) zugegeben und bei 95 bis 100°C bis zum vollständigen Verbrauch der Epoxidgruppen reagiert. Der Ansatz wird dann mit PGME bis zu einem Festkörpergehalt von 65 % verdünnt. Das Produkt weist eine Aminzahl von 51 mg KOH/g auf.

Beispiel 9: In gleicher Weise, wie im Beispiel 2 angegeben, wird eine Harzlösung hergestellt, wobei anstelle des dort eingesetzten ZP 2 494 Tle ZP 8 (entsprechend 346 Tle Festharz = 0,5 Mol) eingesetzt werden.

Prüfung der erfindungsgemäß hergestellten Bindemittel

Die Bindemittel gemäß Beispiel 1 bis 9 wurden mit der Härterkomponente in dem in der Tab. 2 angegebenen Feststoffverhältnis bei 60°C homogen vermischt und aus dieser Mischung ein pigmentierter Lack hergestellt. Dabei wird entsprechend dem folgenden Rezept eine Farbpaste aus

| | |
|---|---|
| 25 Tle | Bindemittel-Härter-Mischung (100 %) |
| 0,25 Tle | Farbruß |
| 3 Tle | basisches Bleisilikatpigment |
| 36,75 Tle | Titandioxid |

auf einem geeigneten Reibaggregat hergestellt, welche nach dem Homogenisieren mit jeweils 75 Tlen (Festharz) der Bindemittel-Mischung komplettiert wird.

Als Vernetzungskomponenten wurden folgende Produkte eingesetzt:

Härterkomponente X: Umesterungshärter auf Basis Malonester gemäß AT-PS 372 099, z. B. entsprechend "Komponente B 2".

Härterkomponente Y: Umesterungshärter auf Basis von modifizierten Malonestern gemäß AT-PS 379 602, z. B. entsprechend Beispiel 1

Härterkomponente Z: Umesterungshärter auf Basis von oligomeren $\beta$-Hydroxyestern gemäß EP-B1-00 12 463, z. B. entsprechend Beispiel II (b).

Die Lacke wurden nach Neutralisation und Verdünnung auf den angegebenen Festkörpergehalt unter Bedingungen, welche eine Trockenfilmstärke von 20 ± 2 $\mu$m ergeben, auf zinkphosphatiertem Stahlblech kathodisch abgeschieden und bei der angegebenen Einbrenntemperatur 30 Minuten eingebrannt. In allen Fällen wird beim Salzsprühtest gemäß ASTM B-117-64 nach einer Prüfdauer von 700 Stunden ein Angriff am Kreuzschnitt von weniger als 2 mm festgestellt. Beim Feuchtschranktest (100 % relative Luftfeuchtigkeit bei 50°C) sind die Beschichtungen nach 500 Stunden in einwandfreiem Zustand.

Zur Prüfung der Haftfestigkeit von PVC-Materialien auf dem kathodisch abgeschiedenen Lack wurde die PVC-Schicht in Form eines Streifens von 2 mm Dicke und 1 cm Breite 30 Minuten nach dem Einbrennen der K-ETL-Grundierung appliziert und 7 Minuten bei 140°C (Objekttemperatur) gehärtet. Die Prüfung der Haftung erfolgte 1 Stunde nach dem Einbrennen.

Beurteilt wird dabei die Abziehbarkeit der PVC-Beschichtung (Note 5 = leicht abziehbar, Note 1 = nicht abziehbar, Beschichtung bricht ohne Ablösung vom Untergrund).

Als PVC-Materialien wurde ein handelsüblicher Unterbodenschutz (Stankiewicz 2252 der Fa. Stankiewicz GmbH, Celle, BRD) sowie eine in der Automobilindustrie eingesetzte Nahtabdichtungsmasse (Dekalin 9003 der Fa. Dekalin, Deutsche Klebstoff-Werke, Hanau, BRD) verwendet.

Beurteilung der Ergebnisse

| Note | Unterbodenschutz<br>Lack Nr. | Nahtabdichtungsmasse<br>Lack Nr. |
|---|---|---|
| 1 | 4, 5, 6, 7 | 3, 5, 6 |
| 2 | 2, 3, 8, 9 | 1, 4, 7, 8 |
| 3 | 1 | 2, 9 |
| 4 - 5 | Vergleichslack A | Vergleichslack A, C |
| 5 | Vergleichslack B, C | Vergleichslack B |

Als Vergleichslack A wurde ein in gleicher Weise hergestellter Lack auf Basis einer Kombination aus 30 Tlen (Festharz) eines Bindemittels gemäß Beispiel 29 der US-PS 4,174,332 und 70 Tlen (Festharz) gemäß Beispiel 8 der EP-B1-00 12 463 verwendet. Beim Vergleichslack B wurde das Verhältnis der beiden Komponenten auf 50 : 50 geändert. Der Vergleichslack C basierte auf einer Bindemittelkombination gemäß Beispiel 4 der EP-B1-00 49 369. Keines dieser Bindemittel weist in seiner Struktur substituierte Harnstoffgruppen auf.

Die Zusammensetzung der Lacke, welche einen Festkörpergehalt von ca. 18 % aufweisen, ist aus der Tabelle 2 ersichtlich.

Tabelle 2 (alle die Harze betreffenden Angaben beziehen sich auf Festharz)

| Lack | 1 | 2 | 3 | 4 | 5 | 6 | 7 | 8 | 9 |
|---|---|---|---|---|---|---|---|---|---|
| Bindemittel | | | | | | | | | |
| Beispiel 1 | 80 | | | | | | | | |
| 2 | | 70 | | | | | | | |
| 3 | | | 75 | | | | | | |
| 4 | | | | 100 | | | | | |
| 5 | | | | | 100 | | | | |
| 6 | | | | | | 100 | | | |
| 7 | | | | | | | 100 | | |
| 8 | | | | | | | | 75 | |
| 9 | | | | | | | | | 70 |
| Härterkomponente | | | | | | | | | |
| X | | 30 | | | | | | 25 | |
| Y | 20 | | | | | | | | 30 |
| Z | | | 25 | | | | | | |
| Neutralisation mMol HCOOH/100 g FH | 40 | 35 | 40 | 45 | 30 | 40 | 45 | 40 | 35 |
| deionis. Wasser | 595 | 608 | 606 | 589 | 584 | 595 | 589 | 584 | 608 |
| Einbrennbedingungen, 30 min bei °C | 165 | 180 | 170 | 165 | 160 | 150 | 165 | 170 | 180 |

**Patentansprüche**

1. Verfahren zur Herstellung von durch Kettenverlängerung modifizierten kationischen Epoxidharzen, dadurch gekennzeichnet, daß man ein Umsetzungsprodukt
(A) aus 2 Mol eines durch Reaktion eines mindestens eine formaldehydreaktive Stelle aufweisenden Phenols mit einem primären Amin und Formaldehyd erhaltenen, eine NH-Gruppe aufweisenden Aminoalkylierungsproduktes und 1 Mol eines Diisocyanates
oder ein Umsetzungsprodukt

(A1)     aus 1 Mol eines durch Reaktion von 1 Mol einer Diisocyanatverbindung mit 2 Mol eines primären Amins erhaltenen substituierten Harnstoffs, 2 Mol Formaldehyd oder einer Formaldehyd abspaltenden Verbindung und 2 Mol eines mindestens eine formaldehydreaktive Stelle aufweisenden Phenols,

(B)     unter Veretherung der phenolischen Hydroxylgruppen mit 1 Mol einer Diepoxidverbindung pro phenolischer Hydroxylgruppe reagiert
und

(C)     die verbleibenden Epoxidgruppen in an sich bekannter Weise mit Aminverbindungen und/oder Carboxylverbindungen umsetzt, mit der Maßgabe, daß das Endprodukt basische Stickstoffgruppen in einer Menge aufweist, welche einer Aminzahl von 35 bis 150 mg KOH/g entspricht.

2.     Verfahren nach Anspruch 1, dadurch gekennzeichnet, daß man als primäres Amin bei der Herstellung der Umsetzungsprodukte (A) bzw. (A1) ein primär-tertiäres Diamin einsetzt.

3.     Verfahren nach den Ansprüchen 1 und 2, dadurch gekennzeichnet, daß man die Reaktion der Amine und/oder Carboxylverbindungen gleichzeitig oder nach der Umsetzung der Epoxidverbindungen mit den Umsetzungsprodukten (A) oder (A1) durchführt.

4.     Verfahren nach Anspruch 3, dadurch gekennzeichnet, daß als Carboxylverbindungen Halbester von Dicarbonsäuren mit Hydroxy(meth)acrylaten eingesetzt werden.

5.     Verwendung der gemäß den Ansprüchen 1 bis 4 hergestellten Produkte als Bindemittel in Einbrennlakken.

6.     Verwendung der gemäß den Ansprüchen 1 bis 4 hergestellten Produkte als Bindemittel in kathodisch abscheidbaren Elektrotauchlacken.

7.     Durch Kettenverlängerung modifizierte kationische Epoxidharze mit einer Aminzahl von 35 bis 150 mg KOH/g auf der Basis von Umsetzungsprodukten von

(B)     Diepoxidharzen
mit

(A)     Reaktionsprodukten aus 2 Mol eines durch Reaktion eines mindestens eine formaldehydreaktive Stelle aufweisenden Phenols mit einem primären Amin und Formaldehyd erhaltenen, eine NH-Gruppe aufweisenden Aminoalkylierungsproduktes und 1 Mol eines Diisocyanates
oder mit

(A1)     Reaktionsprodukten aus 1 Mol eines durch Reaktion von 1 Mol einer Diisocyanatverbindung mit 2 Mol eines primären Amins erhaltenen substituierten Harnstoffes, 2 Mol Formaldehyd oder einer Formaldehyd abspaltenden Verbindung und 2 Mol eines mindestens eine formaldehydreaktive Stelle aufweisenden Phenols
unter Veretherung der phenolischen Hydroxylgruppen,
sowie mit

(C)     Amin- und/oder Carboxylverbindungen.

## Claims

1.     Process for the preparation of cationic epoxy resins modified by chain extension, characterised in that a reaction product

(A)     of 2 moles of an aminoalkylation product containing an NH group and obtained by reacting a phenol containing at least one formaldehyde-reactive site with a primary amine and formaldehyde, and one mole of a diisocyanate,
or a reaction product

(A1)     of 1 mole of a substituted urea obtained by reacting 1 mole of a diisocyanate compound with 2 moles of a primary amine, 2 moles of formaldehyde or a formaldehyde-cleaving compound and 2 moles of a phenol containing at least one formaldehyde-reactive site,
is reacted with

(B)       1 mole per phenolic hydroxyl group of a diepoxide compound by etherification of the phenolic hydroxyl groups,
and

(C)       the residual epoxide groups are reacted in a manner known per se with amine compounds and/or carboxyl compounds, with the proviso that the end product contains basic nitrogen groups in an amount corresponding to an amine value of 35 to 150 mg of KOH/g.

2.    Process according to Claim 1, characterised in that a primary-tertiary diamine is used as primary amine in the preparation of the reaction products (A) and (A1).

3.    Process according to Claims 1 and 2, characterised in that the reaction of the amines and/or carboxyl compounds is carried out at the same time or after the reaction of the epoxide compounds with the reaction products (A) or (A1).

4.    Process according to Claim 3, characterised in that hemi-esters of dicarboxylic acids with hydroxy-(meth)acrylates are used as the carboxyl compounds.

5.    Use of the products prepared according to Claims 1 to 4 as hinders in stoving paints.

6.    Use of the products prepared according to Claims 1 to 4 as binders in cathodically depositable electrocoating paints.

7.    Cationic epoxy resins modified by chain extension and having an amine value of 35 to 150 mg of KOH/g, based on reaction products of

(B)       diepoxy resins
with

(A)       reaction products of 2 moles of an aminoalkylation product containing an NH group and obtained by reacting a phenol containing at least one formaldehyde-reactive site with a primary amine and formaldehyde, and 1 mole of a diisocyanate,
or with

(A1)     reaction products of 1 mole of a substituted urea obtained by reacting 1 mole of a diisocyanate compound with 2 moles of a primary amine, 2 moles of formaldehyde or a formaldehyde-cleaving compound and 2 moles of a phenol containing at least one formaldehyde-reactive site
by etherification of the phenolic hydroxyl groups,
and with

(C)       amine and/or carboxyl compounds.

**Revendications**

1.    Procédé de préparation de résines époxydiques cationiques modifiées par allongement de chaîne, caractérisé en ce que l'on fait réagir un produit de réaction
(A) de 2 moles d'un produit d'aminoalkylation présentant un groupe NH, obtenu par réaction d'un phénol présentant au moins un site réactif vis-à-vis du formaldéhyde avec une amine primaire et le formaldéhyde, et d'une mole d'un diisocyanate,
ou bien un produit de réaction
(A1) d'une mole d'une urée substituée obtenue par réaction d'une mole d'un composé de diisocyanate avec 2 moles d'une amine primaire, de 2 moles de formaldéhyde ou d'un composé libérant du formaldéhyde et de 2 moles d'un phénol présentant au moins un site réactif vis-à-vis du formaldéhyde,
(B) avec 1 mole d'un composé diépoxydique par groupe hydroxyle phénolique avec éthérification des groupes hydroxyle phénoliques
et
(C) on fait réagir de manière connue en soi les groupes époxyde restants avec des composés aminés et/ou des composés carboxylés, avec la condition que le produit final présente des groupes azote basiques en une quantité correspondant à un indice d'amine de 35 à 150 mg de KOH/g.

2.    Procédé selon la revendication 1, caractérisé en ce que l'on utilise comme amine primaire lors de la préparation des produits de réaction (A) ou (A1) une diamine primaire-tertiaire.

3. Procédé selon les revendications 1 et 2, caractérisé en ce que l'on accomplit la réaction des amines et/ou des composés carboxylés en même temps que la réaction des composés époxydiques avec les produits de réaction (A) ou (A1) ou après celle-ci.

4. Procédé selon la revendication 3, caractérisé en ce que l'on utilise comme composés carboxylés des hémiesters de diacides carboxyliques avec des hydroxy(méth)acrylates.

5. Utilisation des produits préparés selon les revendications 1 à 4 comme liants pour peintures à cuire.

6. Utilisation des produits préparés selon les revendications 1 à 4 comme liants pour peintures pour trempage électrophorétique précipitables à la cathode.

7. Résines époxydiques cationiques modifiées par allongement de chaîne ayant un indice d'amine de 35 à 150 mg de KOH/g à base de produits de réaction
   (B) de résines diépoxydiques
   avec
   (A) des produits de réaction de 2 modes d'un produit d'aminoalkylation présentant un groupe NH, obtenu par réaction d'un phénol présentant au moins un site réactif vis-à-vis du formaldéhyde avec une amine primaire et le formaldéhyde, et d'une mode d'un diisocyanate
   ou avec
   (A1) des produits de réaction d'une mode d'une urée substituée obtenue par réaction d'une mode d'un composé de diisocyanate avec 2 modes d'une amine primaire, de deux moles de formaldéhyde ou d'un composé libérant du formaldéhyde et de 2 modes d'un phénol présentant au moins un site réactif vis-à-vis du formaldéhyde
   avec éthérification des groupes hydroxyle phénoliques,
   ainsi qu'avec
   (C) des composés aminés et/ou carboxylés.